# EUROPÄISCHE PATENTANMELDUNG

(11) **EP 4 360 452 A1**
(43) Veröffentlichungstag der Anmeldung: **01.05.2024**
(21) Anmeldenummer: 22204340.8
(22) Anmeldetag: 28.10.2022
(51) Int. Cl.: A01K 5/02

(54) **FÜTTERUNGSVORRICHTUNG, INSBESONDERE FÜR SCHWEINE**

(71) Anmelder: Schauer Agrotronic GmbH, 4731 Prambachkirchen (AT)
(72) Erfinder: AUINGER, Christian, Peuerbach 4722 (AT)
(74) Vertreter: Burger, Hannes

(57) **Zusammenfassung**

Die Erfindung betrifft Fütterungsvorrichtung (1), insbesondere für Sauen, wobei die Fütterungsvorrichtung zumindest eine Trogschale (2) und eine zumindest abschnittsweise über der zumindest einen Trogschale angeordneten Trogwand (3), insbesondere zumindest eine zwei einander gegenüberliegende Bereiche der Trogschale (2) definierende Trogtrennwand, aufweist, wobei an der zumindest einen Trogwand (3) zumindest eine Rüttelwand (4) angeordnet ist, wobei die Rüttelwand (4) schräg zu der Trogwand (3) verlaufend angeordnet ist, und die zumindest eine Trogwand (3) und die zumindest eine Rüttelwand (4) Seitenwände eines sich in Richtung der Trogschale (2) verjüngenden trichterförmigen Zuführbereich für Futtermittel bilden, wobei das untere Ende der Rüttelwand (4) und die Trogwand (3) einen in die Trogschale (2) mündenden Auslassspalt (5) für das Futtermittel begrenzen.

## Beschreibung

Die Erfindung betrifft eine Fütterungsvorrichtung, insbesondere für Schweine, wobei die Fütterungsvorrichtung zumindest eine Trogschale und eine zumindest abschnittsweise über der zumindest einen Trogschale angeordneten Trogwand, insbesondere zumindest eine zwei einander gegenüberliegende Bereiche der Trogschale definierende Trogtrennwand, aufweist.

Das routinemäßige Schwanzkupieren bei Schweinen ist in der EU verboten. Mit neuen Stallkonzepten, mit mehr Platz und Funktionsteilung in Liegen (mit Stroh), Fressen und Misten wird auch die Ringelschwanz Produktion besser möglich. Ideal ist, wenn die Tiere gleichzeitig und ad-libitum fressen können.

Es sind eine Vielzahl an ad-libitum Trocken- und/oder Breifutterautomaten mit einem reduzierten Tier-Fressplatzverhältnis von 1:4 bis 1:8 bekannt geworden. Um ein entsprechendes Fressplatzangebot für das (annähernd) gleichzeitige Fressen (in der Vormast im Verhältnis 1:1, Endmast 1:2) bereitzustellen, müssten (je nach Ausführung) zwei bis drei herkömmliche Futterautomaten aufgestellt werden. Die Kosten herkömmlicher Futterautomaten sind jedoch sehr hoch. Bei Flüssigfütterung hingegen steigt der Verschmutzungsgrad der planbefestigten Flächen und führt zu schnelleren Futteraufnahme der Schweine, was der gegenteilige Effekt wäre.

Aufgabe der vorliegenden Erfindung war es, die Nachteile des Standes der Technik zu überwinden und eine Vorrichtung zur Verfügung zu stellen, die einen einfachen und kostengünstigen Aufbau aufweist sowie ein einfaches Nachrüsten bestehender Fütterungsanlagen ermöglicht.

Diese Aufgabe wird durch eine Vorrichtung der eingangs genannten Art erfindungsgemäß dadurch gelöst, dass an der zumindest einen Trogwand zumindest eine Rüttelwand angeordnet ist, wobei die Rüttelwand schräg zu der Trogwand verlaufend angeordnet ist, und die zumindest eine Trogwand und die zumindest eine Rüttelwand Seitenwände eines sich in Richtung der Trogschale verjüngenden trichterförmigen Vorratsbereich für Futtermittel bilden, wobei das untere Ende der Rüttelwand und die Trogwand einen in die Trogschale mündenden Auslassspalt für das Futtermittel begrenzen.

Die erfindungsgemäße Vorrichtung ermöglicht es auf einfache Weise bestehende Tröge nachzurüsten, da die Rüttelwand an die meist bereits vorhandene Trogwand angebaut werden kann. Um das Futter aus dem Vorratsbereich in die Trogschale zu befördern, müssen die Schweine an der Rüttelwand rütteln. Die Schweine müssen daher aktiv werden, um an Futter zu kommen, und sind lange Zeit mit Wühlen und mit der Futteraufnahme beschäftigt und weniger mit den Schwänzen der anderen Schweine.

Um ein möglichst gleichzeitiges Fressen von vielen Schweinen zu ermöglichen und somit den Stress für die Tiere zu reduzieren, ist es bei einer bevorzugten Variante der Erfindung vorgesehen, dass die zumindest eine Trogschale ein Langtrog mit einer Längserstreckung von zumindest 80cm, insbesondere länger als 2m, bevorzugt länger als 4m, besonders bevorzugt länger als 8m ist.

Gemäß einer vorteilhaften Weiterbildung der Erfindung kann es vorgesehen sein, dass eine Längserstreckung der zumindest einen Rüttelwand zumindest 20%, insbesondere zumindest 30%, besonders bevorzugt mindestens 50% oder mindestens 80%, einer gesamten Länge der zumindest einen Trogschale beträgt.

Als besonders vorteilhaft hat sich erwiesen, dass die Fütterungsvorrichtung zumindest einen Rahmen, insbesondere zumindest einen Leiterrahmen, von dem die Rüttelwand gehalten ist, aufweist.

Weiters kann es vorgesehen sein, dass die Rüttelwand über Seitenteile mit der Trogwand verbunden ist.

Ein einfaches Nachrüsten bestehender Tröge sowie eine einfache Montage werden dadurch begünstigt, dass die Seitenteile insbesondere an der Trogwand oder an einer mit der Trogwand verbundenen Hängevorrichtung eingehängt sind.

Um ein Überfüllen des Troges und damit wesentlicher Futterverluste zu verhindern, kann es vorgesehen sein, dass zwischen dem Auslassspalt und der Trogschale eine Auslaufbremse, insbesondere eine balkenförmig ausgebildete Auslaufbremse, für das Futtermittel angeordnet ist. In diesem Zusammenhang hat es sich als besonders günstig erweisen, dass eine Längserstreckung der Auslaufbremse zumindest der Länge des Auslassspaltes entspricht.

Um die Menge an Futter, welche in die Trogschale fällt, einzustellen, kann es vorgesehen sein, dass die Fütterungsvorrichtung einen Verstellmechanismus zur Veränderung einer Größe des Auslassspaltes umfasst.

Bevorzugt umfasst der Verstellmechanismus zumindest ein Langloch in der Rüttelwand und zumindest ein in das Langloch eingreifendes Führungselement, insbesondere einen Gewindestab, sowie zumindest ein Klemmelement, insbesondere eine Gewindemutter, zur Fixierung des Führungselements gegen die Rüttelwand.

Vorteilhafterweise kann es vorgesehen sein, dass das zumindest eine Führungselement an zumindest einem die Rüttelwand tragenden Querträger angeordnet ist.

Darüber hinaus hat es sich als günstig erwiesen, dass der zumindest eine Querträger die Seitenteile miteinander verbindet.

Ein einfaches Verstellen der Größe des Auslassspaltes lässt sich dadurch gewährleisten, dass bei einem Lösen des Verstellmechanismus die Rüttelwand relativ zu den Seitenteilen verschiebbar ist.

Gemäß einer bevorzugten Weiterbildung der Erfindung kann es vorgesehen sein, dass die Seitenteile jeweils als Winkelprofil mit je zumindest einem parallel zur Rüttelwand verlaufenden Schenkel ausgeführt sind, wobei die Rüttelwand an den parallel zur Rüttelwand verlaufenden Schenkeln anliegt und diese Schenkel bei gelöstem Verstellmechanismus Gleitflächen für die Rüttelwand bildet.

Um möglichst vielen Schweinen ein gleichzeitiges Fressen zu ermöglichen kann es vorgesehen sein, dass die Fütterungsvorrichtung zumindest zwei Rüttelwände aufweist, die an unterschiedlichen Seiten der zumindest einen Trogwand angeordnet sind.

Besonders bevorzugt ist der Auslassspalt über einer Oberkante der Trogschale angeordnet.

Um auch kompaktes Futter trennen zu können, kann zwischen der Rüttelwand und der Trogwand zumindest ein Rüttelgitter angeordnet sein.

Zum besseren Verständnis der Erfindung wird diese anhand der nachfolgenden Figuren näher erläutert.

Es zeigen jeweils in stark vereinfachter, schematischer Darstellung:
Fig. 1 eine Vorderansicht einer erfindungsgemäßen Fütterungsvorrichtung;
Fig. 2 eine Draufsicht auf die Fütterungsvorrichtung aus Fig. 1;
Fig. 3 einen Schnitt entlang der Linie A-A in Fig. 1;
Fig. 4 den Bereich B aus Fig. 3 im näheren Detail;
Fig. 5 eine perspektivische Darstellung des Schnitts aus Fig. 3 und
Fig. 6 eine perspektivische Ansicht einer Variante der erfindungsgemäßen Fütterungsvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

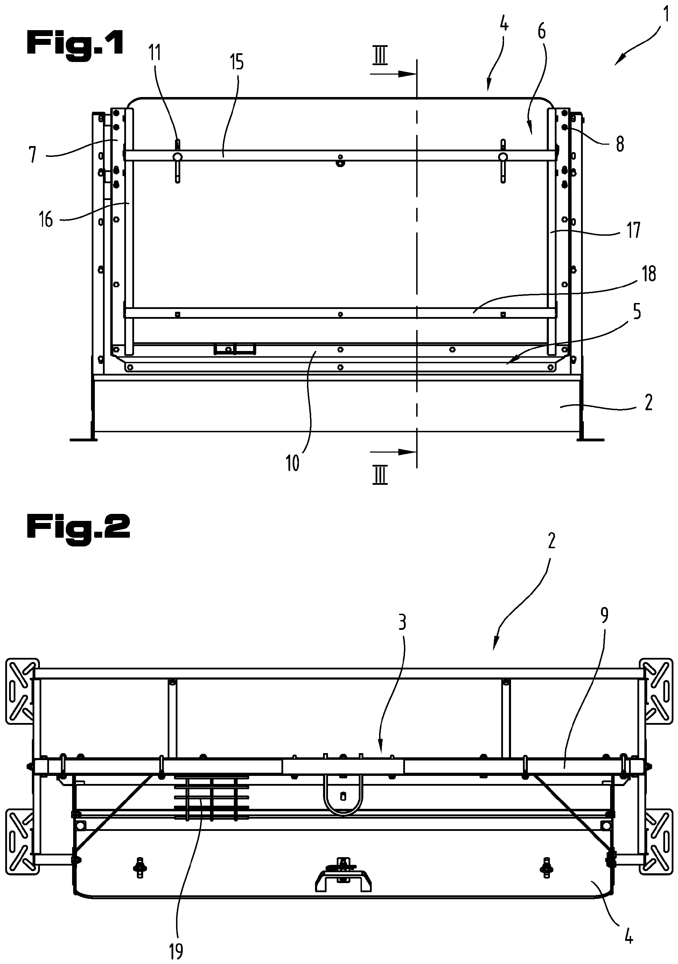

Gemäß Fig.1 und 2 weist eine Fütterungsvorrichtung 1, insbesondere für Schweine, eine Trogschale 2 und eine abschnittsweise über der Trogschale 2 angeordneten Trogwand 3 auf. Eine Unterkante der Trogwand 3 kann unter dem Niveau einer Oberkante der Trogschale 2 liegen. Vorteilhaft ist es, wenn die Unterkante der Trogwand 3 einen Boden der Trogschale 2 nicht berührt und zwischen der Trogwand 3 und dem Boden der Trogschale 2 ein Spalt gebildet ist. Eine Oberkante der Trogwand 3 liegt über dem Niveau der Oberkanten der Trogschale 2, sodass ein Abschnitt der Trogwand 3 über der Trogschale 2 angeordnet ist. Die Trogwand 3 kann, wie aus Fig. 2 ersichtlich ist, eine Trogtrennwand bilden und die Trogschale 2 in zwei einander gegenüberliegende Bereiche trennen.

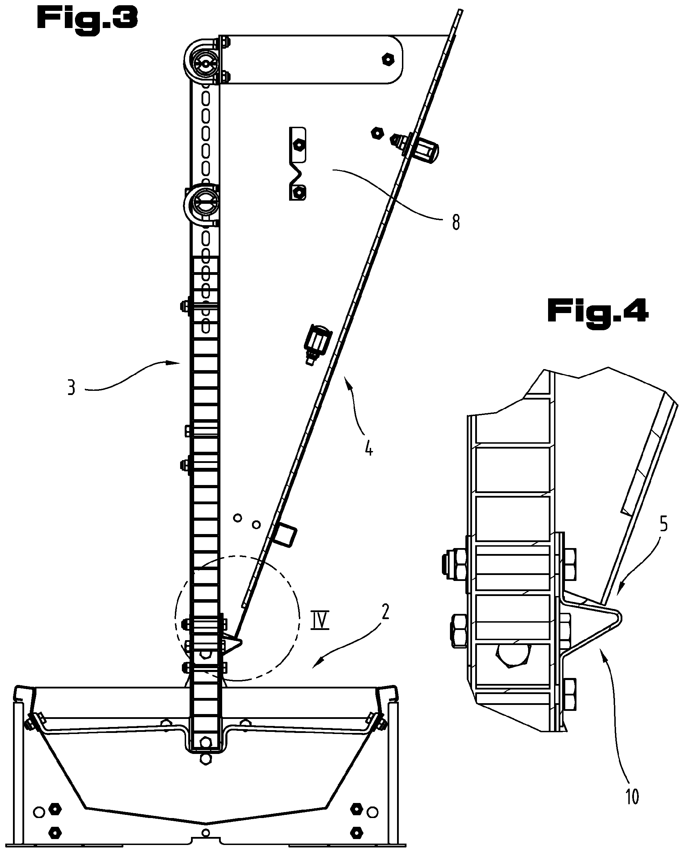

An der Trogwand 3 ist eine Rüttelwand 4 angeordnet. Wie insbesondere aus Fig. 3 ersichtlich ist, ist die Rüttelwand 4 schräg zu der Trogwand 3 verlaufend angeordnet. Die Trogwand 3 und die Rüttelwand 4 bilden Seitenwände eines sich in Richtung der Trogschale 2 verjüngenden trichterförmigen Vorratsbereich für Futtermittel. Das untere Ende der Rüttelwand 4 und die Trogwand 3 begrenzen hierbei einen in die Trogschale 2 mündenden Auslassspalt 5 für das Futtermittel. Durch Rütteln an der Rüttelwand 4 wird in dem trichterförmigen Vorratsbereich vorhandenes Futter in die Trogschale 2 befördert. Um eine gute Verteilung von Futter zu gewährleisten, kann der Auslassspalt 5 über einer Oberkante der Trogschale 2 angeordnet sein.

Die Trogschale 2 kann wie aus den Figuren 1, 2 und 6 ersichtlich ist als ein Langtrog ausgeführt sein. Der Langtrog bietet mehrere nebeneinander liegende Fressplätze für ein gleichzeitiges Fressen an und weist eine Längserstreckung von zumindest 80cm, insbesondere länger als 2m, bevorzugt länger als 4m, besonders bevorzugt länger als 8m auf. Je nach Anzahl der zur Verfügung zu stellenden Fressplätze kann die Länge des Langtroges variieren, wobei von einem Platzbedarf in Längsrichtung des Langtroges betrachtet von 40cm pro Tier ausgegangen wird.

Um mehreren nebeneinander stehenden Tieren ein aktives Rütteln an der Rüttelwand 4 zu ermöglichen, kann es vorgesehen sein, dass eine Längserstreckung der zumindest einen Rüttelwand 4 zumindest 20%, insbesondere zumindest 30%, besonders bevorzugt mindestens 50% oder mindestens 80%, einer gesamten Länge der Trogschale 2 beträgt. In der Praxis hat sich beispielsweise eine Variante bewährt, bei welcher die Länge der Trogschale 4m und die Länge der Rüttelwand 1,32m beträgt.

Wie aus Fig.l weiters ersichtlich ist, kann die Fütterungsvorrichtung 1 weiters Rahmen 6, beispielsweise in Form eines Leiterrahmens aufweisen, von dem die Rüttelwand 4 gehalten ist, aufweist. Die einzelnen Elemente des Rahmens 6 werden im Folgenden noch näher erläutert.

Die Rüttelwand 4 kann über Seitenteile 7, 8 mit der Trogwand 3 verbunden sein. Die Seitenteile 7, 8 können an der Trogwand 3 oder an einer mit der Trogwand 3 verbundenen Hängevorrichtung 9, beispielsweise einer Querstange oder einem Querträger eines Rahmens der Trogwand 3, eingehängt sein.

Zwischen dem Auslassspalt 5 und der Trogschale 2 kann eine Auslaufbremse 10, beispielsweise eine balkenförmig ausgebildete Auslaufbremse, für das Futtermittel angeordnet sein, wie dies insbesondere aus den Fig. 1, 3 und 4 hervorgeht. Eine Längserstreckung der Auslaufbremse 10 kann zumindest einer Länge des Auslassspaltes 5 entsprechen.

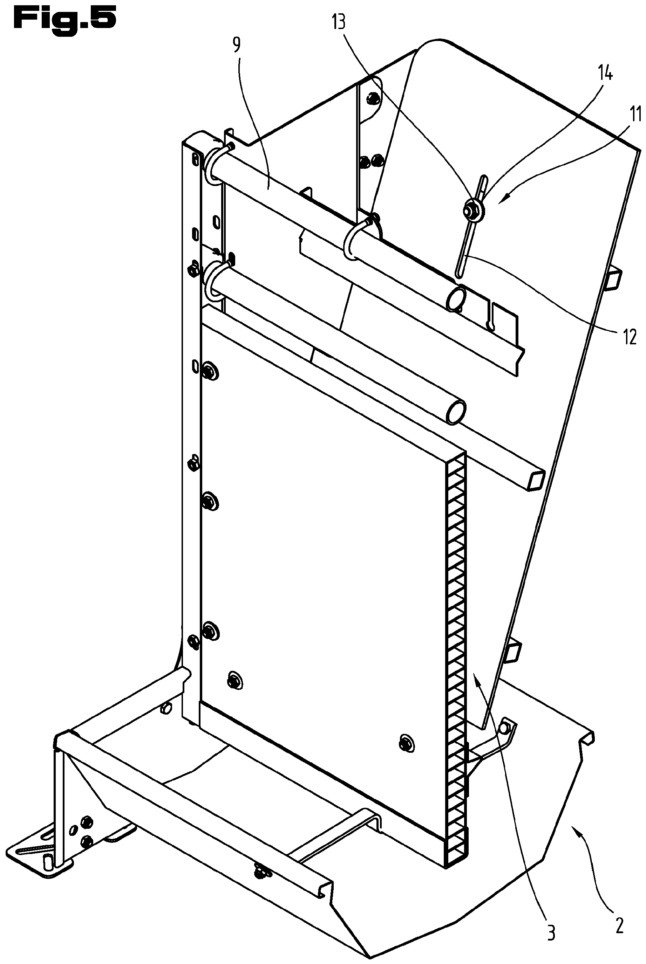

Weiters kann ein in den Figuren 1 und 5 mit dem Bezugszeichen 11 bezeichneter Verstellmechanismus zur Veränderung einer Größe des Auslassspaltes 5 vorgesehen sein.

Der Verstellmechanismus 11 weist gemäß Fig. 1 und 5 mindestens ein Langloch 12 in der Rüttelwand 4 und ein in das Langloch 12 eingreifendes Führungselement 13, beispielsweise einen Gewindestab, sowie zumindest ein Klemmelement 14, insbesondere eine Gewindemutter, zur Fixierung des Führungselements 13 gegen die Rüttelwand 4 auf. Wie aus Fig. 1 weiters ersichtlich ist, sind hier zwei Verstellmechanismen 11 mit parallel zueinander verlaufenden Langlöchern vorgesehen, was eine bevorzugte Ausführungsform darstellt.

Der Verstellmechanismus 11 kann gemäß Fig. 1 und 5 an einem die Rüttelwand 4 tragenden Querträger 15 angeordnet sein. Der Querträger 15 kann, wie in Fig. 1 dargestellt, die Seitenteile 7, 8 miteinander verbinden. Hierbei kann insbesondere des Führungselement 13 an dem Querträger 15 angeordnet sein, diesen beispielsweise durchsetzen.

Bei einem Lösen des Verstellmechanismus 11 kann die Rüttelwand 4 relativ zu den Seitenteilen 7, 8 verschoben werden und somit die Größe des Auslassspaltes 5 verändert werden.

Die Seitenteile 7, 8 können jeweils als Winkelprofil mit je zumindest einem parallel zur Rüttelwand 4 verlaufenden Schenkel 16, 17 ausgeführt sein. Die Rüttelwand 4 liegt an den parallel zur Rüttelwand 4 verlaufenden Schenkeln 16, 17 an. Bei gelöstem Verstellmechanismus 11 bilden die Schenkel 16, 17 Gleitflächen für die Rüttelwand 4.

Auch wenn die Rüttelwand 4 durch an dem oberen Querträger 15 mittels des Verstellmechanismus 11 aufgehängt ist, so kann auch ein unterer Querträger 18 vorgesehen sein, an dessen der Trogwand 3 zugewandter Seite die Rüttelwand 4 anliegt. Der untere Querträger 18 hat vornehmlich die Funktion ein Verschwenken der Rüttelwand 4 von der Trogwand 3 weg zu verhindern.

Die Seitenteile 7, 8 und die Querträger 15 und 18 können gemeinsam den oben erwähnten Rahmen 6 für die Rüttelwand 4 bilden.

Gemäß Fig. 2 kann zwischen der Rüttelwand 4 und der Trogwand 3 zumindest ein Rüttelgitter 19 angeordnet sein. Durch das Rüttelgitter 19 kann schwer zu trennendes, kompaktes Futter in kleinere Stücke zerteilt werden. Stäbe 19 des Rüttelgitters 19 zerteilen einen größeren Futterblock in kleinere Teile, bevor es schließlich in die Trogschale 2 fällt.

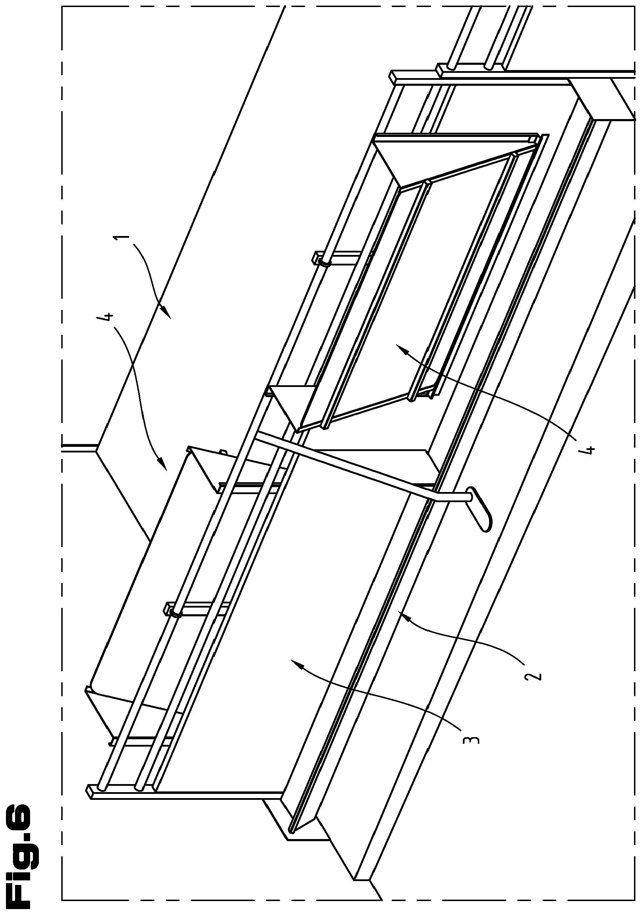

Wie aus Fig. 6 ersichtlich ist, kann die Fütterungsvorrichtung auch zwei Rüttelwände 4 aufweist, die an unterschiedlichen Seiten der einen Trogwand 3 angeordnet sein können. Auf diese Weise lässt sich der zum Fressen und aktiven Rütteln zur Verfügung stehende Bereich auf einfache Weise wesentlich vergrößern.

**Bezugszeichenaufstellung**
- 1: Fütterungsvorrichtung
- 2: Trogschale
- 3: Trogwand
- 4: Rüttelwand
- 5: Auslassspalt

- 6: Rahmen
- 7: Seitenteil
- 8: Seitenteil
- 9: Hängevorrichtung
- 10: Auslaufbremse

- 11: Verstellmechanismus
- 12: Langloch
- 13: Führungselement
- 14: Klemmelement
- 15: Querträger

- 16: Schenkel
- 17: Schenkel
- 18: Querträger
- 19: Rüttelgitter

## Patentansprüche

1. Fütterungsvorrichtung (1), insbesondere für Schweine, wobei die Fütterungsvorrichtung zumindest eine Trogschale (2) und eine zumindest abschnittsweise über der zumindest einen Trogschale angeordneten Trogwand (3), insbesondere zumindest eine zwei einander gegenüberliegende Bereiche der Trogschale (2) definierende Trogtrennwand, aufweist, **dadurch gekennzeichnet, dass** an der zumindest einen Trogwand (3) zumindest eine Rüttelwand (4) angeordnet ist, wobei die Rüttelwand (4) schräg zu der Trogwand (3) verlaufend angeordnet ist, und die zumindest eine Trogwand (3) und die zumindest eine Rüttelwand (4) Seitenwände eines sich in Richtung der Trogschale (2) verjüngenden trichterförmigen Vorratsbereich für Futtermittel bilden, wobei das untere Ende der Rüttelwand (4) und die Trogwand (3) einen in die Trogschale (2) mündenden Auslassspalt (5) für das Futtermittel begrenzen.

2. Fütterungsvorrichtung nach Anspruch 1, **dadurch gekennzeichnet, dass** die zumindest eine Trogschale (2) ein Langtrog mit einer Längserstreckung von zumindest 80cm, insbesondere länger als 2m, bevorzugt länger als 4m, besonders bevorzugt länger als 8m ist.

3. Fütterungsvorrichtung nach einem der Ansprüche 1 oder 2, **dadurch gekennzeichnet, dass** eine Längserstreckung der zumindest einen Rüttelwand (4) zumindest 20%, insbesondere zumindest 30%, besonders bevorzugt mindestens 50% oder mindestens 80%, einer gesamten Länge der zumindest einen Trogschale (2) beträgt.

4. Fütterungsvorrichtung nach einem der Ansprüche 1 bis 3, **dadurch gekennzeichnet, dass** sie zumindest einen Rahmen (6), insbesondere zumindest einen Leiterrahmen, von dem die Rüttelwand (4) gehalten ist, aufweist.

5. Fütterungsvorrichtung nach einem der Ansprüche 1 bis 4, **dadurch gekennzeichnet, dass** die Rüttelwand (4) über Seitenteile (7, 8) mit der Trogwand (3) verbunden ist.

6. Fütterungsvorrichtung nach Anspruch 5, **dadurch gekennzeichnet, dass** die Seitenteile (7, 8) insbesondere an der Trogwand (3) oder an einer mit der Trogwand (3) verbundenen Hängevorrichtung (9) eingehängt sind.

7. Fütterungsvorrichtung nach einem der Ansprüche 1 bis 6, **dadurch gekennzeichnet, dass** zwischen dem Auslassspalt (5) und der Trogschale (2) eine Auslaufbremse (10), insbesondere eine balkenförmig ausgebildete Auslaufbremse (10), für das Futtermittel angeordnet ist.

8. Fütterungsvorrichtung nach Anspruch 6 oder 7, **dadurch gekennzeichnet, dass** eine Längserstreckung der Auslaufbremse (10) zumindest einer Länge des Auslassspaltes (5) entspricht.

9. Fütterungsvorrichtung nach einem der Ansprüche 1 bis 8, **dadurch gekennzeichnet, dass** sie einen Verstellmechanismus (11) zur Veränderung einer Größe des Auslassspaltes (5) umfasst.

10. Fütterungsvorrichtung nach Anspruch 9, **dadurch gekennzeichnet, dass** der Verstellmechanismus (11) zumindest ein Langloch (12) in der Rüttelwand (4) und zumindest ein in das Langloch (12) eingreifendes Führungselement (13), insbesondere einen Gewindestab, sowie zumindest ein Klemmelement (14), insbesondere eine Gewindemutter, zur Fixierung des Führungselements (13) gegen die Rüttelwand (4) umfasst.

11. Fütterungsvorrichtung nach Anspruch 10, **dadurch gekennzeichnet, dass** das zumindest eine Führungselement (13) an zumindest einem die Rüttelwand (4) tragenden Querträger (15) angeordnet ist.

12. Fütterungsvorrichtung nach Anspruch 11, **dadurch gekennzeichnet, dass** der zumindest eine Querträger (15) die Seitenteile (7, 8) miteinander verbindet.

13. Fütterungsvorrichtung nach einem der Ansprüche 9 bis 12, **dadurch gekennzeichnet, dass** bei einem Lösen des Verstellmechanismus (11) die Rüttelwand (4) relativ zu den Seitenteilen (7, 8) verschiebbar ist.

14. Fütterungsvorrichtung nach Anspruch 13, **dadurch gekennzeichnet, dass** die Seitenteile (7, 8) jeweils als Winkelprofil mit je zumindest einem parallel zur Rüttelwand (4) verlaufenden Schenkel (16, 17) ausgeführt sind, wobei die Rüttelwand (4) an den parallel zur Rüttelwand (4) verlaufenden Schenkeln (16, 17) anliegt und diese Schenkel (16, 17) bei gelöstem Verstellmechanismus (11) Gleitflächen für die Rüttelwand (4) bildet.

15. Fütterungsvorrichtung nach einem der Ansprüche 1 bis 14, **dadurch gekennzeichnet, dass** sie zumindest zwei Rüttelwände (4) aufweist, die an unterschiedlichen Seiten der zumindest einen Trogwand (3) angeordnet sind.

16. Fütterungsvorrichtung nach einem der Ansprüche 1 bis 15, **dadurch gekennzeichnet, dass** der Auslassspalt (5) über einer Oberkante der Trogschale (2) angeordnet ist.

17. Fütterungsvorrichtung nach einem der Ansprüche 1 bis 16, **dadurch gekennzeichnet, dass** zwischen der Rüttelwand (4) und der Trogwand (3) zumindest ein Rüttelgitter (19) angeordnet ist.
